# FASCICULE DE BREVET EUROPEEN

(11) **EP 1 272 779 B1**
(45) Date de publication et mention de la délivrance du brevet: **21.04.2004**
(21) Numéro de dépôt: 01919580.9
(22) Date de dépôt: 27.03.2001
(51) Int. Cl.: F16H 53/02

(54) **DISPOSITION D'ASSEMBLAGE DE CAMES SUR UN ARBRE DE COMMANDE COMMUN**
NOCKENSATZ AUF EINER GEMEINSAMEN STEUERWELLE
CAM ASSEMBLY ARRANGEMENT ON A COMMON POWER SHAFT

(30) Priorité: 04.04.2000 FR 0004255
(43) Date de publication de la demande: 08.01.2003
(73) Titulaire: Alstom, 75116 Paris (FR)
(72) Inventeur: DIANIN, Ferruccio, I-35030 Saccolongo (IT)
(74) Mandataire: Poulin, Gérard
(86) Numéro de dépôt international: PCT/FR2001/000927
(87) Numéro de publication internationale: WO 2001/075335

(56) Documents cités:
- WO-A-99/35373
- DE-U- 8 517 278
- FR-A- 862 541

## Description

La présente invention concerne une disposition d'assemblage de cames sur un arbre de commande commun.

Une disposition d'assemblage, connue, de cames sur un arbre de commande commun comprend un arbre de commande de section carrée sur lequel la série successive de cames est montée de la façon suivante : chaque came possède un orifice circulaire et est montée sur une douille épaulée, de révolution, comportant un diamètre externe égal au diamètre de l'orifice circulaire de la came. La came, montée sur cette douille, s'appuie sur l'épaulement de la douille. La douille est percée axialement d'un trou de section carrée de la même section que celle de l'arbre de commande, et est montée sur celui-ci. Un écrou venant se visser sur la douille permet de bloquer la came dans sa position angulaire, une fois celle-ci ajustée, en la serrant entre cet écrou et l'épaulement de la douille.

Cette disposition d'assemblage nécessite une douille et un écrou de blocage pour chaque came et chaque came est individuellement bloquée au moyen de son écrou après son positionnement angulaire précis.

Une telle disposition, outre la multiplicité des pièces, nécessite un temps de montage assez long, notamment si le nombre de cames est élevé, ce qui peut parfois être le cas.

Ainsi, dans la disposition connue décrite ci-dessus, les cames actionnent des contacts électriques d'indication de position d'un appareil tel qu'un sectionneur selon ses positions : ouvert, fermé, ainsi que ses positions intermédiaires lors d'une manoeuvre, et plusieurs cames peuvent être prévues pour la même position.

Le document le plus proche WO-A-99/35373 montre un dispositif d'assemblage de cames sur un arbre de commande commun et chaque came comprenant un trou circulaire de diamètre D pour son montage sur l'arbre chaque came étant montée sur l'arbre entre deux cales d'épaisseur ayant chacune un trou central de même section que celle de l'arbre, l'arbre étant équipé de moyens de serrage, exerçant un effort déterminé, de l'assemblage constitué, permettant l'ajustement angulaire individuel de chaque came et de moyens de blocage de l'assemblage, une fois l'ajustement angulaire de chaque came effectué, et lesdits moyens de serrage comportent un écrou de serrage.

L'invention a pour but de proposer un assemblage plus simple, moins cher, comportant moins de pièces, diminuant le temps de montage et le facilitant. Elle peut être utilisée dans toute application où une pluralité de cames est montée sur un arbre commun.

L'invention a ainsi pour objet une disposition d'assemblage de cames sur un arbre de commande commun, l'arbre ayant une section non circulaire et chaque came comprenant un trou circulaire de diamètre D pour son montage sur l'arbre, caractérisé en ce que ladite section non circulaire dudit arbre est inscrite dans un cercle de même diamètre D et étant telle qu'une came introduite sur l'arbre ne puisse avoir par rapport à cet arbre qu'une liberté de rotation autour d'un unique axe fixe par rapport à l'arbre, en ce que chaque came est montée sur l'arbre entre deux cales d'épaisseur ayant chacune un trou central de même section que celle de l'arbre, en ce que l'arbre est équipé de moyens de serrage, exerçant un effort déterminé, de l'assemblage constitué, permettant l'ajustement angulaire individuel de chaque came et de moyens de blocage de l'assemblage, une fois l'ajustement angulaire de chaque came effectué.

Avantageusement, la section de l'arbre de commande est carrée.

On va maintenant donner un exemple de mise en oeuvre de l'invention en se reportant au dessin annexé dans lequel :
- La fig. 1 montre en vue partielle une disposition d'assemblage de cames selon l'invention pour actionner des contacts de signalisation, par exemple pour un sectionneur.
- La fig. 2 est une vue en coupe selon II-II de la fig. 1.

En se référant aux figures, on voit une disposition d'assemblage d'une pluralité de cames 1 sur un arbre de commande commun 2. Chaque came est prévue pour actionner un contact particulier 3. L'ensemble est logé dans une boîte 4 dont deux parois opposées 5 et 6 servent de support à l'arbre de commande 2.

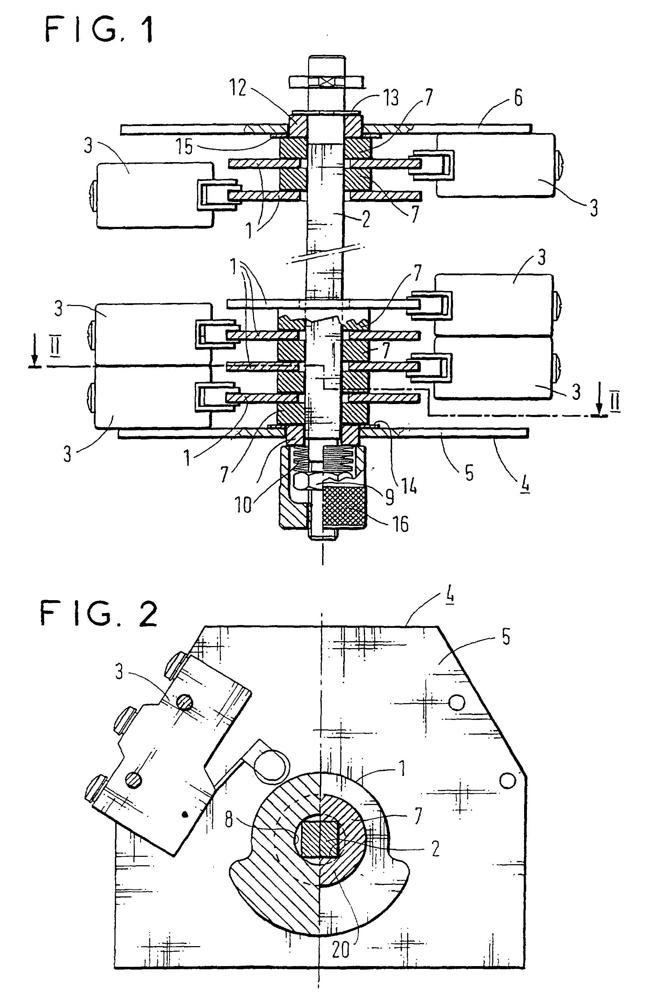

L'invention s'applique à un nombre quelconque de cames montées sur l'arbre de commande 2, et sur la fig. 1 l'arbre est montré interrompu dans sa partie centrale pour illustrer que ce nombre est indéfini.

Chaque came 1 est montée sur l'arbre de commande 2 entre deux cales d'épaisseur 7.

L'arbre de commande 2 a une section non circulaire de façon à entraîner dans sa rotation les cales 7.

Avantageusement, et comme c'est le cas de l'exemple décrit, la section de l'arbre de commande 2 est carrée.

Chaque came comprend un trou circulaire 8 pour son montage sur l'arbre 2. Ce trou circulaire 8 a un diamètre D et la section non circulaire de l'arbre, ici carrée, est inscrite dans ce même cercle de diamètre D (le centre du cercle de diamètre D dans lequel s'inscrit la section de l'arbre 2 doit être situé à l'intérieur de la section ou, à la limite, sur l'un de ses côtés, de façon à ce que la came, montée sur l'arbre, ne puisse avoir par rapport à l'arbre qu'un mouvement de rotation autour d'un unique axe, fixe par rapport à l'arbre 2).

Les cales d'épaisseur 7 séparant les cames les unes des autres ont chacune un trou central 20 ayant une section identique à celle de l'arbre de commande commun 2.

De façon à permettre le réglage angulaire individuel de chaque came et le blocage simultané de toutes les cames une fois le réglage angulaire individuel effectué, l'arbre est équipé d'un moyen de serrage exerçant sur l'assemblage un effort déterminé mais non bloquant, permettant d'ajuster individuellement la position angulaire de chaque came. Il s'agit en l'occurrence d'un écrou de serrage 9 vissé à l'une des extrémités de l'arbre de commande 2 serrant l'assemblage par l'intermédiaire d'un ressort de tarage 10.

Dans l'exemple décrit, le ressort de tarage 10 prend appui contre un tourillon 11 prenant lui-même appui contre une première cale d'épaisseur 7, et tourillonnant dans un palier aménagé dans la paroi 5.

A l'autre extrémité de l'arbre 2, la dernière cale d'épaisseur s'appuie elle-même contre un tourillon 12 en butée contre un circlip 13 monté sur l'arbre 2. Le tourillon 12 tourillonne dans un palier aménagé dans la paroi 6.

Une rondelle anti-friction, respectivement 14, 15, est disposée entre la paroi 5 et la première cale 7, et entre la dernière cale 7 et la paroi 6.

Ainsi l'on peut serrer l'assemblage suffisamment pour que les cames ne puissent pas pivoter intempestivement, mais pas trop non plus, de façon à pouvoir les ajuster angulairement, manuellement. L'ajustement d'une came n'a pas d'influence sur la précédente ou la suivante puisque les cales d'épaisseur 7 de séparation sont bloquées en rotation par leur trou central de même section que l'arbre de commande.

Une fois toutes les cames réglées angulairement, on bloque simultanément l'ensemble grâce à un écrou de blocage 16 vissé derrière l'écrou de serrage 9 et serrant l'assemblage en shuntant le ressort 10, c'est-à-dire que l'écrou de blocage 16 comporte une jupe 17 coiffant l'écrou de serrage 9 et le ressort 10, et venant prendre appui directement contre le tourillon 11. L'écrou de blocage 16 est moleté et peut donc être serré manuellement, suffisamment pour assurer le blocage de toutes les cames 1.

Ainsi, comme on le voit, le montage est simple, nécessite peu de pièces, et il n'est plus nécessaire de fixer chaque came individuellement dans sa position une fois ajustée, mais un seul écrou de blocage 16 assure la fixation de l'ensemble des cames.

## Revendications

1. Disposition d'assemblage de cames (1) sur un arbre de commande commun (2), l'arbre ayant une section non circulaire et chaque came comprenant un trou circulaire (8) de diamètre D pour son montage sur l'arbre (2), **caractérisé en ce que** ladite section non circulaire dudit arbre (2) est inscrite dans un cercle de même diamètre D et étant telle qu'une came (1) introduite sur l'arbre (2) ne puisse avoir par rapport à cet arbre qu'une liberté de rotation autour d'un unique axe fixe par rapport à l'arbre, **en ce que** chaque came (1) est montée sur l'arbre entre deux cales d'épaisseur (7) ayant chacune un trou central (20) de même section que celle de l'arbre (2), **en ce que** l'arbre est équipé de moyens de serrage (9, 10), exerçant un effort déterminé, de l'assemblage constitué, permettant l'ajustement angulaire individuel de chaque came (1) et de moyens de blocage (16) de l'assemblage, une fois l'ajustement angulaire de chaque came effectué.

2. Disposition selon la revendication 1, **caractérisée en ce que** la section de l'arbre de commande commun (2) est carrée.

3. Disposition selon l'une des revendications 1 ou 2, **caractérisée en ce que** lesdits moyens de serrage comportent, à une extrémité de l'arbre de commande, un écrou de serrage (9) vissé sur cette extrémité, avec interposition d'un ressort de tarage (10) prenant appui sur une extrémité de l'assemblage.

4. Disposition selon la revendication 3, **caractérisée en ce que** le moyen de blocage est un écrou de blocage (16) venant se visser sur la même extrémité de l'arbre de commande et prenant appui sur l'extrémité de l'assemblage en shuntant ledit ressort de tarage (10).

5. Disposition selon l'une des revendications 3 ou 4, **caractérisée en ce que** ledit ressort (10) prend appui sur l'extrémité de l'assemblage par l'intermédiaire d'un tourillon (11) tourillonnant dans une paroi support (5).

6. Disposition selon la revendication 5, **caractérisée en ce que** ledit écrou de blocage (16) comprend une jupe coiffant l'écrou de serrage (9) et ledit ressort de tarage (10), et prenant appui contre ledit tourillon (11).

## Patentansprüche

1. Anordnung eines Satzes von Nocken (1) auf einer gemeinsamen Steuerwelle (2), wobei die Welle einen nicht-kreisförmigen Querschnitt aufweist und jeder Nocken ein kreisförmiges Loch (8) mit Durchmesser D für seine Montage auf der Welle (2) aufweist, **dadurch gekennzeichnet, dass** der nicht-kreisförmige Querschnitt der Welle (2) in einen Kreis mit gleichem Durchmesser D eingeschrieben und derart gewählt ist, dass ein auf die Welle (2) gesetzter Nocken (1) bezüglich dieser Welle nur eine Rotationsfreiheit um eine einzige Achse hat, die bezüglich der Welle fest ist, dass jeder Nocken (1 ) auf der Welle zwischen zwei Unterlegplatten (7) montiert ist, die jeweils ein Mittelloch (20) mit gleichem Querschnitt wie die Welle (2) aufweisen, dass die Welle mit Mitteln (9, 10) zum Einklemmen des gebildeten Satzes ausgestattet ist, die eine vorbestimmte Kraft ausüben, was die individuelle angulare Einstellung jedes Nockens (1) und von Mitteln (16) zum Blockieren des Satzes ermöglicht, sobald die angulare Einstellung jedes Nockens erfolgt ist.

2. Anordnung nach Anspruch 1, **dadurch gekennzeichnet, dass** der Querschnitt der gemeinsamen Steuerwelle (2) quadratisch ist.

3. Anordnung nach einem der Ansprüche 1 oder 2, **dadurch gekennzeichnet, dass** die Klemm-Mittel an einem Ende der Steuerwelle eine Klemm-Mutter (9) umfassen, die auf dieses Ende unter Dazwischenfügung einer Ausgleichsfeder (10) geschraubt ist, welche an einem Ende des Satzes anliegt.

4. Anordnung nach Anspruch 3, **dadurch gekennzeichnet, dass** das Blockiermittel eine Blockiermutter (16) ist, die auf das gleiche Ende der Steuerwelle geschraubt ist und am Ende des Satzes anliegt, wobei sie die Ausgleichsfeder (10) überbrückt.

5. Anordnung nach einem der Ansprüche 3 oder 4, **dadurch gekennzeichnet, dass** die Feder (10) am Ende des Satzes mittels eines Drehzapfens (11) anliegt, der sich in einer Stützwand (5) dreht.

6. Anordnung nach Anspruch 5, **dadurch gekennzeichnet, dass** die Blockiermutter (16) einen Mantel umfasst, der die Klemm-Mutter (9) und die Ausgleichsfeder (10) überdeckt und am Drehzapfen (11) anliegt.

## Claims

1. An assembly disposition, of cams (1) on a common control shaft (2), the shaft being non-circular in section and each cam having a circular hole (8) of diameter D enabling it to be mounted on the shaft (2), the disposition being **characterized in that** said non-circular section of said shaft (2) is inscribed in a circle of said diameter D and is such that a cam (1) inserted on the shaft (2) can pivot relative to the shaft about only a single axis that is fixed relative to the shaft, **in that** each cam (1) is mounted on the shaft between two thickness spacers (7) each having a central hole (20) having the same section as the shaft (2), and **in that** the shaft is fitted both with clamping means (9, 10) exerting a determined force on the resulting assembly that enables the angular position of each cam (1) to be adjusted individually, and with locking means (16) for locking the assembly once the angular position of each cam has been adjusted.

2. A disposition according to claim 1, **characterized in that** the section of the common control shaft (2) is square.

3. A disposition according to claim 1 or 2, **characterized in that** said clamping means comprise, at one end of the control shaft, a clamping nut (9) screwed onto said end, with a rated spring (10) being interposed to bear against one end of the assembly.

4. A disposition according to claim 3, **characterized in that** the locking means is a locking nut (16) that is screwed onto the same end of the control shaft and that bears against the end of the assembly, bypassing said rated spring (10).

5. A disposition according to claim 3 or 4, **characterized in that** said spring (10) bears against the end of the assembly via a stud (11) rotatably received in a support wall (5).

6. A disposition according to claim 5, **characterized in that** said locking nut (16) has a skirt that covers the clamping nut (9) and said rated spring (10) so as to bear against said stud (11).
